# EUROPEAN PATENT SPECIFICATION

(11) **EP 2 742 091 B1**
(45) Date of publication and mention of the grant of the patent: **04.11.2015**
(21) Application number: 12772537.2
(22) Date of filing: 10.08.2012
(51) Int. Cl.: C08K 5/098, C08J 9/00

(54) **THE USE OF ALUMINIUM DIBROMOSALICYLATE, A PROCESS FOR PREPARING NON-FLAMMABLE ORGANIC PLASTICS, AND A FLAME RETARDANT COMPOSITION FOR ITS PREPARATION**
VERWENDUNG VON ALUMINIUMDIBROMSALICYLAT, VERFAHREN ZUR HERSTELLUNG NICHT ENTFLAMMBARER ORGANISCHER KUNSTSTOFFE UND FEUERFESTE ZUSAMMENSETZUNG ZU IHRER HERSTELLUNG
UTILISATION DE DIBROMOSALICYLATE D'ALUMINIUM, PROCÉDÉ POUR LA PRÉPARATION DE MATIÈRES PLASTIQUES ORGANIQUES ININFLAMMABLES ET COMPOSITION IGNIFUGEANTE POUR SA PRÉPARATION

(30) Priority: 11.08.2011 PL 39593611
(43) Date of publication of application: 18.06.2014
(73) Proprietor: Synthos S.A., 32-600 Oswiecim (PL)
(72) Inventor: MARELOVÁ, Jana, PL-32-600 Oswiecim (PL); Möbiusová, Monika, PL-32-600 Oswiecim (PL)
(74) Representative: Witek, Rafal
(86) International application number: PCT/PL2012/050027
(87) International publication number: WO 2013/022361

(56) References cited:
- US-A- 5 300 389
- US-A1- 2008 300 328
- US-A1- 2011 042 606
- US-B1- 6 340 713

## Description

The present invention relates to the use of aluminium dibromosalicylate for the preparation of organic plastics characterized by good thermal insulation and reduced inflammability. Particular aspect of the present invention is the process for preparing expandable plastics based on polymers of aromatic vinyl compounds (polystyrene compounds), that allow to obtain products with improved performance characteristics which are obtained from their foamed form and the flame retardant composition designated for the preparation of such materials and products. Technological development within the last century led to the use of synthetic polymers based on carbon for the production of daily necessities for housekeeping and public institutions. The foams of polymers of aromatic vinyl compounds cope very well now, first of all as thermal insulations for buildings, having thermal conductivity in the range of 0,030 - 0,045 W/m.K (depending on the volume density of the foams and additive contents). High inflammability degree of these materials means that their presence would create risk, in particular in situations where the use of given object is connected with a high ignition risk.

There are many standards determining fire-safety requirements for apartments, electric equipment elements, interior arrangement of the apartments and cars. An achievement of required fire-safety standards (most often EN 13 501-1 standard, E class or DIN 4102, B2 standard) frequently requires the use of so called flame retardants (FR).

There is known a two-stage production process of the foams of polymers of aromatic vinyl compounds (polystyrene compounds), wherein the first step comprises preparation of particles (granules) in the process of suspension polymerization of styrene (in suspension), wherein an expanding agent is uniformly dispersed. In the second step the foam is formed from the granules (EPS, *expanded polystyrene foam).* In this process the flame retardant is incorporated into a mixture that is reacted during the polymerization.

The second possibility how to obtain polystyrene foam is used an extrusion process. A polystyrene melt is impregnated with a fluid blowing agent, usually an isomeric pentane mixture or different low blowing hydrocarbones, at high temperature and pressure. Additives, as for example flame retardants, pigments, lubricants, nucleating agents or other substances, can be added through a side or main extruder. After the additive mixer, the homogeneous, blowing agents and additive loaded melt is extruded through die-holes and cut by a rotating knife in an underwater pelletizer to yield micro pellets (granulated EPS production process, gEPS) or XPS which begins as a molten material also but that is pressed out of a form into sheets.

The group of the most often used flame retardants of polymers of aromatic vinyl compounds (polystyrene compounds) type comprises retardants based on halogen compounds. Necessary amount of the flame retardant depends on its effectiveness and is ranged from 0,5 to 1 %. Almost all flame retardants reduce T_{g} values of polystyrene that imply the reduction of thermal strength of the foams. This effect is frequently compensated by addition of the compounds forming cross-linked structures, such as divinylbenzene. Some of the flame retardants show also tendencies to reduce the molar mass of polystyrene.

Because the polystyrene foam is subjected to the process in reduced temperatures, for these purposes aliphatic compounds containing bromine can be used. The useful additives used for EPS grading appeared pentabromophenyl 2,3-dibromopropyl ether, bis(2,3-dibromopropyl) tetrabromobisphenol An ether and bis(2,3-dibromopropyl) tetrabromophthalate. Usually, the most often used flame retardants for EPS designed for the production of insulating plates is 1,2,5,6,9,10-hexabromocyclododecane (HBCD) due to the necessity to meet the domestic standards of fire protection in the building engineering. A threat to the possibility of further application of this flame retardant will be recognition this compound as a toxic substance for the aqueous environments and of high bio-accumulation potential.

Despite described above solutions, it should be recognized that the plastics inflammability is still significant technical problem requiring better solution. In particular, it is desirable to provide new substances and/or their compositions suitable for reducing the inflammability of organic plastics, especially EPS. In the case of EPS it is also desirable to avoid undesirable deterioration of mechanical properties of the material, which occurs in the case of using known refining substances. The toxicity of refined plastics should be also reduced.

Unexpectedly, indicated technical problem was solved in the present invention.

The present invention relates to the use of aluminium dibromosalicylate (Al-diBr-Sal), the process for preparing organic plastics and the flame retardant composition for its preparation, technical characteristics of which are defined in appended patent claims.

The base of disclosed invention is the use of aluminium dibromosalicylate compound as the additive incorporated directly into the suspension in polymerization of produced organic plastic, in particular in the suspension polymerization of expandable polystyrene, in order to improve its heat-insulating properties and reduce its inflammability.

According to the present invention aluminium dibromosalicylate may be thus used for grading the following organic plastics: polystyrene and copolymers of styrene with dienes or acrylic monomers, for example copolymer of styrene and butadiene, styrene and methacrylate, or styrene and maleic anhydride. Aluminium dibromosalicylate may be used as new compound for reducing the inflammability of foamable polystyrene (EPS), that is produced using the suspension polymerization method, wherein this compound is added to the process in dispersed in styrene or mixture of styrene and co-monomers form.

Physical properties, in particular mechanical parameters of the polystyrene foams formed in the extrusion moulding process with addition of new flame retardant, i.e. aluminium dibromosalicylate, may be improved by intermixing polystyrene with other polymers of thermoplastic properties, which are miscible with polystyrene or miscible as a result of using so called compatibilizer. The following polymers may be used: polyamide (PA), polyethylene (PE), polypropylene (PP), poly(methyl methacrylate) (PMM), polycarbonate (PC), poly(ethylene terephthalate) (PET), poly(butylene terephthalate) (PBT), polyethersulfone (PES), polyetherketone (PEK) or polyphenylether (PPE), in the weight content in ratio to polystyrene in the range from 1 to 99 %.

Another advantage of using this material is its lower toxicity for the environment as distinguished from currently used flame retardants.

The particular aspect of the present invention refers to the production of expandable polystyrene granulate using the suspension polymerization method of styrene with an optional addition of other co-monomers such as α-methylstyrene, alkylated or halogenated monomers of styrene on the benzene nucleus, acrylonitrile, acrylic, methacrylic, maleic acid esters with alcohols having from 2 to 6 C atoms and in the presence of one or more organic peroxy initiators added in amounts from 0,10 to 1,4, preferably from 0,20 to 0,60 parts by weight based on monomer, with a half-life of one hour at the temperature from 80 to 130°C. Other known free-radical polymerization initiators, for example azobisisobutyronitrile or 2,3-dimethyl-2,3-diphenylbutane, can be used simultaneously with these peroxy initiators.

Moreover, in order to improve processing characteristics of materials it can be decided to add a monomer with minimal two double bonds able to be polymerized through free-radical polymerization in amount from 10⁻³ to 10⁻² parts by weight based on monomer (EP 0488040 A). In order to ensure the stability of the suspension following the procedure according to the present invention it can be used known substances such as colloidal stabilizing agents soluble in water, such as eg. polyvinyl alcohol, cellulose derivatives, polyvinyl pyrrolidone, etc. or inorganic stabilizing agents, insoluble in water, such as eg. magnesium hydroxide, calcium or magnesium phosphate, bentonite, barium sulphate, etc.

Molecular weight distribution in polymer matrix can be substantially controlled by means of amounts of added initiators, the temperature of polymerization, chemical composition of the expanding agent, its addition at different stages of the polymerization process, addition of popular molecular weight regulators, such as eg. mercaptans, α-methylstyrene dimer, carbon bromide or 2,6-di-tert-butyl-para-cresole.

As expanding agents it can be used from 3 to 11% by weight saturated aliphatic or cyclic hydrocarbons, such as eg. n-butane, isobutane, n-pentane, isopentane, cyclopentane or the mixture of hexanes, preferably the mixture of n-pentane with addition of maximally 30% by weight of isopentane.

In order to ensure extinguishing of the expandable polystyrene, it is used the addition of aluminium dibromosalicylate with a concentration of a maximum 5% by weight (based on styrene), whereas in order to improve its extinguishing and reducing the amounts of additive extinguishing substances in polymer it is added substances exhibiting the synergetic effect (dicumyl peroxide, 2,3-dimethyl-2,3-diphenylbutane). Used aluminium dibromosalicylate should contain minimally 43% bounded bromine, whereas the ash content should not exceed 10%, with an average molecular size d₅₀ in the range of 0,5 to 15 micrometers, wherein d₉₀ should not exceed the values of 100 micrometers. The obtained material meets the requirements specified in DIN4102, B2 standard for inflammability of the polymeric foams, and its thermal conductivity , which depends on the used concentration of aluminium dibromosalicylate, reaches the values from 32 to 35 mW/m.K.

Moreover, it can be used other auxiliary substances, such as for example polyethylene waxes, olefin polymers with different molecular weights, fat acid amides, pigments, inorganic and organic fillers, and substances that enhance thermal resistance of the foam products, such as eg. polymerized alkylated 1,4-phenylethers or polymerized 1,4-phenylsulfides.

For the purpose of better illustration of its essence, the selected embodiments of the claimed invention were discussed in the following examples, which, however, are not intended to be identified with its full scope.

### Example 1. The method of preparation of aluminium dibromosalicylate

Aluminium dibromosalicylate (Al-diBr-Sal) as a new compound rendering inflammability of organic plastics may be obtained in the two-step or three-step process, in the form of mono- or di-base: C₆H₂Br₂OHCOOAl(OH)₂. In the first step, dibromosalicylic acid is obtained in the reaction of salicylic acid with bromine (bromination reaction into ortho and para position).

C₆H₄OH(COOH) + Br₂ > C₆H₂Br₂OH(COOH)

The second step is neutralization reaction of dibromosalicylic acid with aluminium hydroxide. In the reaction of dibromosalicylic acid and aluminium hydroxide there is formed stoichiometric mixture of two bases: mono- and di-base of aluminium dibromosalicylate of a formula C₆H₂Br₂OHCOOAl(OH)₂. The theoretical composition of the mixture is 45% of the di-base and 55 % of the mono-base of aluminium dibromosalicylate.

The obtained mixture is in the form of white powder, consisting of particles of dimensions of 30 µm. In the third step, the substance is subjected to grinding in the pulverizer to obtain the particles of dimensions in the range of 1 to 10 µm. Additionally, aluminium dibromosalicylate can be subjected to the surface treatment by means of plasma in order to increase its hydrophobic properties.

### Example 2. Composition for refining EPS

In order to obtain EPS with decreased inflammability and maintained mechanical properties can be used one of the following two compositions, wherein the components are added in the first step of polymerization.

**Composition 1**

| Component | Amount |
|---|---|
| aluminium dibromosalicylate | - 2,0 |
| dicumyl peroxide | - 0,63 |

**Composition 2**

| Component | Amount |
|---|---|
| aluminium dibromosalicylate | - 3,0 |
| 2,3-dimethyl-2,3-diphenylbutane | - 0,63 |

### Example 3. Preparation of EPS by the method of the invention

The stainless steel pressure reactor was stepwise charged, using constant stirring, with the following components:
2,90 kg of styrene
5,50 parts by weight of 5% aqueous solution of polyvinyl alcohol (PVA)
2,00 parts by weight of aluminium dibromosalicylate (Al-diBr-Sal)
0,63 parts by weight of dicumyl peroxide (DCP)
0,10 parts by weight of polyethylene wax
0,15 parts by weight tert-butyl-2-ethylhexyl peroxydicarbonate.
5,5 kg of demineralised water (dosed during different conversions of monomer),
then the contents of the reactor was heated to 90°C, and there was added 0,30 parts by weight of dibenzyl peroxide per 100 parts by weight of styrene and 0,10 parts by weight.

After 4-5 hours of polymerization, 9 parts by weight of pentane fraction of the following composition: 85 % by weight of n-pentane, 15% by weight of isopentane, was added to the closed reactor. The process was continued for 1 additional hour at the temperature of 90°C, and then the temperature of polymerization was fluently increased during 1 hour to the value of 120°C and the process was continued at this temperature for the next 3 hours.

After cooling down, the polystyrene suspension was washed with water, centrifuged and dried at the room temperature in the laboratory conditions.

Before the preliminary foaming, dry granules was centrifuged to isolate from them the fraction of 0,9 to 1,8 mm, then they were submitted the surface modification using 0,30% by weight of glycerine mono-stearate in laboratory apparatus for the preliminary foaming, and were preliminary foamed into density of 15 to 20 kg/m³. The obtained material was laid down for about 24 hours at the room temperature, then it was placed in the form of dimensions 320 x 400 x 120 mm, to shape appropriate blocks by using steam blow of 0,6 and 0,8 MPa.

The contents of the expanding agent and residual styrene were determined by means of gas chromatography.

In order to determine the average size of the polymer granules, grain size analysis was performed through separation of dry granules from 2 samples taken during receiving the suspension from the reactor.

The molecular weight was determined by means of gel chromatography.

The contents of bromine in the polymer were determined by the X-ray fluorescence spectroscopy method.

The contents of the additive according to the present invention were determined by the indirect method through the measurement of the amounts of salicylic acid using the liquid chromatography method.

The sizes of the preliminary foamed particles were determined using optical microscope.

The evaluation of inflammability of expanded polystyrene was performed according to the DIN 4102, B2 standard.

Compression strength at 10% deformation (EN 826), bending strength (EN 12 089), and thermal conductivity (EN 12 667).

The properties of the product are presented in the Tables 1 and 2.

### Example 4.

An expandable polystyrene granulate was prepared in the manner described above, in example 3, except that the concentration of aluminium dibromosalicylate was 2,5 parts by weight, and suspension polymerization was performed with the conversion of 40%. The stability of the suspension was modulated by addition of 0,14 parts by weight of potassium peroxodisulphate.

The properties of the product are presented in the Tables 1 and 2.

### Example 5.

An expandable polystyrene granulate was prepared in the manner described above, in example 3, except that the concentration of aluminium dibromosalicylate was 3,0 parts by weight, and suspension polymerization was performed with the conversion of 40%. The stability of the suspension was modulated by addition of 0,10 parts by weight of potassium peroxodisulphate, and as suspension stabilizing agent calcium phosphate was used.

The properties of the product are presented in the Tables 1 and 2.

### Example 6.

An expandable polystyrene granulate was prepared in the manner described above, in example 3, except that the concentration of aluminium dibromosalicylate was 2,5 parts by weight, and material was subjected to the surface treatment using plasma. As a synergetic agent 2,3-dimethyl-2,3-diphenylbutane was used. The suspension polymerization was performed with the conversion of 40%. The stability of the suspension was modulated by addition of 0,12 parts by weight of potassium peroxodisulphate.

The properties of the product are presented in the Tables 1 and 2.

**Table 1. Basic properties of the polystyrene grain obtained in the process of suspension polymerization with addition aluminium dibromosalicylate according to the examples 1 - 4**

| Names of used additives | Parts by weight | Contents of additives* | Contents of bromine | d₅₀ | M_{w} | Residual styrene** | Contents of expanding agent | Cell size*** |
|---|---|---|---|---|---|---|---|---|
| | | % | % | mm | kg/mole | ppm | % | mm |
| Al-diBr-Sal/DCP | 2,0/0,63 | 1,49 | 0,59 | 0,62 | 200 | 810 | 5,9 | 10-210 |
| Al-diBr-Sal/ DCP | 2,5/0,63 | 1,85 | 0,91 | 0,83 | 173 | 420 | 6,12 | 10-230 |
| Al-diBr-Sal/DCP | 3,0/0,45 | 2,46 | 1,05 | 1,02 | 161 | 770 | 5,7 | 10-250 |
| Al-diBr-Sal/-Pergasafe FR | 2,5/0,63 | 2,05 | 0,87 | 0,89 | 177 | 800 | 5,5 | 10-320 |

| | | | | | | | | |
|---|---|---|---|---|---|---|---|---|
| Explanations for the table: * Contents of additive - the concentration as determined in the final polymer ** Residual styrene - the residual amount of the monomer after the polymerization was complete *** Particles size - as measured in polystyrene particles after foaming | | | | | | | | |

**Table 2. Demanded and achieved physical properties of the polystyrene foams (EPS) according to the PLN EN 13 163 standard, which were obtained using foaming method, and then thermoforming method**

| Property/Standard | Unit | Demanded value of bulk density (GN) = 20 g/l | Demanded value of bulk density (GN) = 16 g/l | Achieved value of bulk density (GN) |
|---|---|---|---|---|
| Compression strength at 10% deformation according to the EN 826 standard | kPa | > 100 | > 70 | 128/GN20 |
| | | | | 104/GN17 |
| Bending strength according to the EN 12 089 standard | kPa | > 150 | > 115 | 274/GN21 |
| | | | | 269/GN18 |
| Dimension changes | % | < -3 | < -3 | -2,6/GN23 |
| | | | | -3,1/GN21 |

| Inflammability according to the DIN 4102B2 standard | | meets requirements | meets requirements | does not meet requirements* meets requirements |
|---|---|---|---|---|
| Thermal conductivity according to the EN 12 667 standard | mW/m.K | < 37 | < 40 | 32,8/GN26 |
| | | | | 32,7/GN20 |

| | | | | |
|---|---|---|---|---|
| Explanations for the table: * during the inflammability test two among five samples did not meet the requirement - the flame exceed the limit of 15 cm | | | | |

Example 7.1 and 7.2. Granulated polystyrene EPS, obtained in the extrusion moulding process. Production process of granulated EPS is performed in the range of temperatures of 150-250°C. Aluminium dibromosalicylate is dosed in the range of 1 to 15% by weight. As a synergetic agent 2,3-dimethyl-2,3-diphenylbutane in the dosage range from 1 to 10% is used.

Example 8. Polymers other than polystyrene refined with aluminium dibromosalicylate. Polyolefins, eg. polypropylene is refined by the addition of aluminium dibromosalicylate in the extrusion moulding process, in the dosage range from 1 to 40% by weight. The extrusion moulding process is performed in the range of temperatures of 140-250 °C.

Example 9. The polymer mixtures of polystyrene and other polymers refined with aluminium dibromosalicylate.

The mixtures of polystyrene with polyolefins, eg. Polypropylene, are refined by the addition of aluminium dibromosalicylate in the extrusion moulding process, in the dosage range from 1 to 40% by weight. The extrusion moulding process is performed in the range of temperatures of 150-250 °C.

**Table 3. Exemplary compositions of granulated EPS material obtained in the extrusion moulding process, and exemplary compositions of polypropylene and the mixture of polystyrene and polypropylene.**

| | M_{w} | Example 7.1 | Example 7.2 | Example 8 | Example 9 |
|---|---|---|---|---|---|
| | g/mole | % | | | |
| Polypropylene | 200 000 | | | 85 | 40 |
| GPPS Krasten^{®} | 220 000 | 91 | 91,5 | | 50 |
| Carbon Black N-990 | | 5 | 5 | | |
| Pentane | | 6,8 | 6,7 | | |
| Al-diBr-Sal (d₅₀=1,02 ppm) | | 4 | 3 | 15 | 10 |
| Synergetic agent (bicumyl) | | - | 0,5 | | |
| Foam density (kg/m³) | | 19,6 | 20,1 | 20,00 | 21,00 |
| DIN 4102 B2 | | meets requirements | meets requirements | meets requirements | meets requirements |

## Claims

1. A use of aluminium dibromosalicylate for the preparation of non-flammable organic plastics.

2. The use of claim 1, **characterized in that** prepared plastic is a material selected from the group comprising: polystyrene, co-polymer of styrene with dienes or acrylic monomers, co-polymer of styrene and butadiene, co-polymer of styrene and methacrylate or co-polymer of styrene and maleic anhydride.

3. The use of claim 1, **characterized in that** in the case of preparation of polymers of aromatic vinyl compounds, especially polystyrene compounds, additionally, a compound selected from the group comprising: dicumyl peroxide or 2,3-dimethyl-2,3-diphenylbutane is used.

4. A composition for reducing the inflammability of EPS, **characterized in that** it contains aluminium dibromosalicylate in amount from 1 to 15 parts by weight per 100 parts by weight of polymer.

5. The composition of claim 4, **characterized in that** additionally, it contains a compound selected from the group comprising: dicumyl peroxide or 2,3-dimethyl-2,3-diphenylbutane, preferably in amount from 0,1 to 5 parts by weight per 100 parts by weight of monomer.

6. A process for preparing of non-flammable, foamable plastics, **characterized by**
a) preparing aqueous suspension containing: monomer of styrene, polyvinyl alcohol, water, stabilizer of the suspension and inflammability reducing component,
b) performing the suspension polymerization of styrene by addition of dibenzyl peroxide and potassium peroxodisulphate, preferably at the temperature about 90°C, and for about 4 to 5 hours,
c) adding the pentane fraction containing n-pentane and isopentane and continuing the polymerization reaction for about hour at the same temperature, and then rising stepwise the temperature to about 120°C and continuing the process for about 3 to 4 hours,
d) cooling down the obtained suspension, and washing with water, centrifuging and drying, and optionally subjecting to surface modification using 0,30% by weight of glycerine mono-stearate
e) subjecting of obtained polystyrene granules, preferably in size of 0,9 to 1,8 mm, to preliminary foaming into the density of 15 to 20 kg/m³,
f) if necessary, forming blocks of the material by using steam blow of 0,6 and 0,8 MPa,
wherein as inflammability reducing component it is used aluminium dibromosalicylate in amount from 1 to 6 parts by weight, preferably from 2,0 to 3,5 parts by weight per 100 parts by weight used monomer.

7. The process of claim 6, **characterized in that** aluminium dibromosalicylate is used together with a compound selected from the group comprising: dicumyl peroxide or 2,3-dimethyl-2,3-diphenylbutane, preferably in amount from 0,1 to 5 parts by weight per 100 parts by weight of monomer.

8. The process of claim 6, **characterized in that** the suspension polymerization with addition of water is performed at a conversion of monomer that does not exceed 40%.

9. The process of claim 6, **characterized in that** used aluminium dibromosalicylate has an average particles size d50 value in the range of 0,5 to 15 micrometers, with the majority of particles in the range of 1 to 10 micrometers, and d90 value does not exceed 30 micrometers.

10. The process of claim 6, **characterized in that** aluminium dibromosalicylate is subjected to previous surface treatment by means of plasma in order to increase its hydrophobic properties.

11. The process of claim 6, **characterized in that** in the extrusion moulding process of the polystyrene foams dosing of aluminium dibromosalicylate is performed in the range of 1 to 15% by weight, wherein preferably it is used the process temperature in the range of 100 to 250°C.

## Patentansprüche

1. Verwendung von Aluminiumdibromsalicylat zur Herstellung von nicht-entflammbaren organischen Kunststoffen.

2. Verwendung nach Anspruch 1, **dadurch gekennzeichnet, dass** der hergestellte Kunststoff ein Material ist ausgewählt aus der Gruppe umfassend Polystyrol, Copolymer von Styrol mit Dienen oder Acrylmonomeren, Copolymer von Styrol und Butadien, Copolymer von Styrol und Methacrylat oder Copolymer von Styrol und Maleinsäureanhydrid.

3. Verwendung nach Anspruch 1, **dadurch gekennzeichnet, dass** im Fall der Herstellung von Polymeren von aromatischen Vinylverbindungen, insbesondere Polystyrolverbindungen, zusätzlich eine Verbindung ausgewählt aus der Gruppe umfassend Dicumylperoxid oder 2,3-Dimethyl-2,3-diphenylbutan verwendet wird.

4. Zusammensetzung zur Verringerung der Entflammbarkeit von EPS, **dadurch gekennzeichnet, dass** sie Aluminiumdibromsalicylat in einer Menge von 1 bis 15 Gewichtsanteilen pro 100 Gewichtsanteilen an Polymer enthält.

5. Zusammensetzung nach Anspruch 4, **dadurch gekennzeichnet, dass** sie zusätzlich eine Verbindung ausgewählt aus der Gruppe umfassend Dicumylperoxid oder 2,3-Dimethyl-2,3-diphenylbutan, bevorzugt in einer Menge von 0,1 bis 5 Gewichtsanteilen pro 100 Gewichtsanteilen an Monomer enthält.

6. Verfahren zur Herstellung von nicht-entflammbaren, schäumbaren Kunststoffen, **gekennzeichnet durch**
a) Herstellen einer wässrigen Suspension enthaltend: Monomer von Styrol, Polyvinylalkohol, Wasser, Stabilisator der Suspension und die Entflammbarkeit verringernde Komponente,
b) Durchführen der Suspensionspolymerisierung von Styrol **durch** Hinzugabe von Dibenzylperoxid und Kaliumperoxodisulfat, bevorzugt bei einer Temperatur von ungefähr 90°C, und für ungefähr 4 bis 5 Stunden,
c) Hinzufügen der Pentanfraktion enthaltend n-Pentan und Isopentan und Fortführen der Polymerisierungsreaktion für ungefähr 1 Stunde bei derselben Temperatur, und dann schrittweises Anheben der Temperatur auf ungefähr 120°C, und Fortführen des Prozesses für ungefähr 3 bis 4 Stunden,
d) Abkühlen der erhaltenen Suspension, und Waschen mit Wasser, Zentrifugieren und Trocknen und gegebenenfalls Unterziehen einer Oberflächenmodifikation unter der Verwendung von 0,30 Gew% Glycerinmonostearat,
e) Unterziehen des erhaltenen Polystyrolgranulats, bevorzugt in einer Größe von 0,9 bis 1,8 mm, einer vorläufigen Aufschäumung in eine Dichte von 15 bis 20 kg/m³,
f) falls erforderlich, Bilden von Blöcken des Materials **durch** Verwendung von geblasenem Dampf von 0,6 und 0,8 MPa,
wobei als eine die Entflammbarkeit verringernde Komponente Aluminiumdibromsalicylat in einer Menge von 1 bis 6 Gewichtsanteilen, bevorzugt von 2,0 bis 3,5 Gewichtsanteilen pro 100 Gewichtsanteilen von verwendetem Monomer, verwendet wird.

7. Verfahren nach Anspruch 6, **dadurch gekennzeichnet, dass** Aluminiumdibromsalicylat zusammen mit einer Verbindung ausgewählt aus der Gruppe umfassend Dicumylperoxid oder 2,3-Dimethyl-2,3-diphenylbutan, bevorzugt in einer Menge von 0,1 bis 5 Gewichtsanteilen pro 100 Gewichtsanteilen an Monomer, verwendet wird.

8. Verfahren nach Anspruch 6, **dadurch gekennzeichnet, dass** die Suspensionspolymerisierung unter Zugabe von Wasser bei einer Konversion von Monomer durchgeführt wird, die 40% nicht überschreitet.

9. Verfahren nach Anspruch 6, **dadurch gekennzeichnet, dass** das verwendete Aluminiumdibromsalicylat einen durchschnittlichen Partikelgröße-d50 Wert im Bereich von 0,5 bis 15 Mikrometer aufweist, wobei sich die Mehrheit der Partikel im Bereich von 1 bis 10 Mikrometern befindet und der d90 Wert 30 Mikrometer nicht übersteigt.

10. Verfahren nach Anspruch 6, **dadurch gekennzeichnet, dass** das Aluminiumdibromsalicylat einer vorhergehenden Oberflächenbehandlung mittels Plasma unterzogen wurde, um dessen hydrophobe Eigenschaften zu verbessern.

11. Verfahren nach Anspruch 6, **dadurch gekennzeichnet, dass** in dem Extrusionsformverfahren der Polystyrolschäume eine Dosierung von Aluminiumdibromsalicylat im Bereich von 1 bis 15 Gew% durchgeführt wird, wobei bevorzugt die Prozesstemperatur im Bereich von 100 bis 250°C verwendet wird.

## Revendications

1. Utilisation de dibromosalicylate d'aluminium pour la préparation de plastique organique non-inflammable.

2. Utilisation selon la revendication 1, **caractérisée en ce que** le plastique préparé est un matériau sélectionné dans le groupe comprenant : du polystyrène, un copolymère de styrène avec des diènes ou des monomères acryliques, un copolymère de styrène et de butadiène, un copolymère de styrène et de méthacrylate ou un copolymère de styrène et d'anhydride maléique.

3. Utilisation selon la revendication 1, **caractérisée en ce que** dans le cas de la préparation de polymères de composés vinyle aromatiques, tout particulièrement des composés de polystyrène, en outre, un composé sélectionné dans le groupe comprenant : du peroxyde de dicumyle ou du 2,3-diméthyl-2,3-diphénylbutane est utilisé.

4. Composition permettant de réduire l'inflammabilité de l'EPS, **caractérisée en ce qu'**elle contient du dibromosalicylate d'aluminium en une quantité allant de 1 à 15 parties en poids pour 100 parties en poids de polymère.

5. Composition selon la revendication 4, **caractérisée en ce que**, en outre, elle contient un composé sélectionné dans le groupe comprenant : du peroxyde de dicumyle ou du 2,3-diméthyl-2,3-diphénylbutane, de préférence en une quantité allant de 0,1 à 5 parties en poids pour 100 parties en poids de monomère.

6. Procédé permettant de préparer un plastique expansible non inflammable, **caractérisé par**
a) la préparation d'une suspension aqueuse contenant : un monomère de styrène, de l'alcool polyvinylique, de l'eau, un stabilisateur de la suspension et un composant réducteur de l'inflammabilité,
b) la réalisation de la polymérisation du styrène dans la suspension par addition de peroxyde de dibenzyle et de peroxodisulfate de potassium, de préférence à la température d'environ 90°C, et pendant environ 4 à 5 heures,
c) l'ajout de la fraction pentane contenant du n-pentane et de l'isopentane et la poursuite de la réaction de polymérisation pendant environ une heure à la même température, et ensuite l'augmentation par paliers de la température jusqu'à environ 120°C et la poursuite du processus pendant environ 3 à 4 heures,
d) le refroidissement de la suspension obtenue et le lavage avec de l'eau, la centrifugation et le séchage et facultativement la soumission à une modification de surface en utilisant 0,30 % en poids de monostéarate de glycérine,
e) la soumission des granulés de polystyrène obtenus, de préférence, d'une taille de 0,9 à 1,8 mm, à une expansion préliminaire à la densité de 15 à 20 kg/m³,
f) si nécessaire, la formation de blocs du matériau en utilisant un jet de vapeur de 0,6 et 0,8 MPa, où en tant que composant réducteur de l'inflammabilité est utilisé du dibromosalicylate d'aluminium en une quantité allant de 1 à 6 parties en poids, de préférence allant de 2,0 à 3,5 parties en poids pour 100 parties en poids de monomère utilisé.

7. Procédé selon la revendication 6, **caractérisé en ce que** le dibromosalicylate d'aluminium est utilisé conjointement avec un composé sélectionné dans le groupe comprenant : du peroxyde de dicumyle ou du 2,3-diméthyl-2,3-diphénylbutane, de préférence en une quantité allant de 0,1 à 5 parties en poids pour 100 parties en poids de monomère.

8. Procédé selon la revendication 6, **caractérisé en ce que** la polymérisation en suspension avec addition d'eau est réalisée à une conversion de monomère qui ne dépasse pas 40 %.

9. Procédé selon la revendication 6, **caractérisé en ce que** le dibromosalicylate d'aluminium a une valeur de taille de particule moyenne d50 dans la plage de 0,5 à 15 micromètres, la majorité des particules se situant dans la plage de 1 à 10 micromètres, et la valeur d90 ne dépasse pas 30 micromètres.

10. Procédé selon la revendication 6, **caractérisé en ce que** le dibromosalicylate d'aluminium est soumis à un traitement de surface antérieur au moyen d'un plasma afin d'augmenter ses propriétés hydrophobes.

11. Procédé selon la revendication 6, **caractérisé en ce que** dans le procédé de moulage par extrusion des mousses de polystyrène un dosage du dibromosalicylate d'aluminium est réalisé dans la plage de 1 à 15 % en poids, la température de procédé étant de préférence utilisée dans la plage de 100 à 250°C.
